# FASCICULE DE BREVET EUROPEEN

(11) **EP 1 692 539 B1**
(45) Date de publication et mention de la délivrance du brevet: **21.06.2017**
(21) Numéro de dépôt: 04820959.7
(22) Date de dépôt: 09.12.2004
(51) Int. Cl.: G01S 7/48

(54) **SYSTÈME OPTRONIQUE ACTIF LASER À DÉTECTIVITÉ AMÉLIORÉE**
AKTIVE OPTO-ELEKTRONISCHE LASERVORRICHTUNG MIT VERBESSERTER EMPFINDLICHKEIT
LASER ACTIVE OPTRONIC SYSTEM WITH IMPROVED DETECTIVITY

(30) Priorité: 12.12.2003 FR 0314602
(43) Date de publication de la demande: 23.08.2006
(73) Titulaire: THALES, 92400 Courbevoie (FR)
(72) Inventeur: PAPUCHON, Michel Thales Intellectual Property, F-94117 Arcueil Cedex (FR); POCHOLLE, Jean-Paul Thales Intellectual Property, F-94117 Arcueil Cedex (FR)
(74) Mandataire: Esselin, Sophie
(86) Numéro de dépôt international: PCT/EP2004/053370
(87) Numéro de publication internationale: WO 2005/066653

(56) Documents cités:
- WO-A-02/093806
- US-A- 3 521 070
- US-A- 4 197 006

## Description

L'invention concerne un système optronique actif laser à détectivité améliorée, et s'applique notamment à un système d'imagerie active ou à un système de télémétrie laser et de façon générale à tout système optronique actif comprenant une voie d'émission et une voie de réception laser, et plus particulièrement dans les systèmes dits à sécurité oculaire.

Les systèmes optroniques actif laser connaissent de nombreuses applications dont notamment la télémétrie, basée sur la mesure de temps de vol d'une impulsion laser émise par le système et rétroréfléchie par la cible, ou les systèmes d'imagerie active, dans lesquels une cible à imager est éclairée par une source non naturelle type source laser. Pour des raisons de sécurité oculaire, on est amené à éviter l'emploi de sources d'émission dont les longueurs d'onde sont dans le visible. On leur préfère des sources d'émission à longueur d'onde dites à sécurité oculaire, c'est à dire des longueurs d'onde à laquelle les zones de l'oeil antérieures à la rétine (cornée, humeur aqueuse, cristallin) sont absorbantes, de sorte à ce que la rétine soit protégée en cas d'impact d'un faisceau laser dans l'oeil. Ces longueurs d'onde appartiennent au proche infrarouge (typiquement au-dessus de 1 µm), et les sources classiquement utilisées sont par exemple les lasers dopés Erbium (longueur d'onde d'émission 1,5 µm), ou les lasers dopés Néodyme (source d'émission à 1,06 µm) associés à des dispositifs optiques non linéaires comme les oscillateurs paramétriques optiques, pour émettre à des longueurs d'onde supérieures à 1 µm. L'emploi de telles sources nécessite de trouver pour les systèmes optroniques des composants (optique, récepteur, etc.) sensibles à ces longueurs d'onde.

Une raison de l'insuffisance de détectivité dans les systèmes optroniques actifs, de type imagerie active ou télémétrie, vient notamment du flux parasite incident sur le détecteur généré par les diffusions atmosphériques sur les premières centaines de mètres du trajet optique entre le système et la cible. Ce flux parasite peut générer un signal de détection d'amplitude supérieure à celui résultant du flux rétroréfléchi par la cible qui peut être à plusieurs kilomètres du système.

Une façon de s'affranchir de ce problème consiste à commuter la capacité de détection du récepteur du système optronique pour le rendre inopérant pendant une durée donnée, grâce à la mise en place d'un dispositif électronique dans le détecteur lui-même. Cette technique ne dépend pas de la longueur d'onde utilisée ; elle est donc opérante dans les systèmes optroniques à sécurité oculaire. Cependant, on peut être amené à rechercher des temps de commutation très courts, par exemple pour la réalisation de systèmes d'imagerie avec résolution distance. Le dispositif électronique de commutation doit présenter dans ce cas une forte bande passante et est générateur de bruit.

L'invention présente un système optronique actif à détectivité améliorée, permettant de limiter le flux parasite dû à la rétrodiffusion sur l'atmosphère grâce à un dispositif de commutation contrôlé. Il est basé sur la mise en oeuvre sur la voie de réception du système optronique d'un dispositif de commutation optique utilisant un milieu à gain optique pompé par des moyens de pompage commandés par une unité de commande, permettant l'activation du dispositif de commutation avec des temps de commutation très courts (de l'ordre de la nanoseconde) et compatible des systèmes à sécurité oculaire.

Plus précisément, l'invention propose un système optronique actif laser comprenant une voie pour l'émission d'un faisceau laser d'illumination d'une cible par une source d'émission, une voie pour la réception de l'onde rétrodiffusée par la cible, et sur la voie de réception, un dispositif de commutation recevant ladite onde rétrodiffusée, caractérisé en ce que
- le dispositif de commutation est un dispositif de commutation optique qui comprend un milieu à gain optique et des moyens de pompage dudit milieu à gain, ledit milieu à gain étant absorbant à la longueur d'onde du laser correspondant à un mode bloqué du dispositif de commutation et devenant sensiblement transparent lorsqu'il est pompé correspondant à un mode passant du dispositif de commutation, de telle sorte à permettre l'activation du dispositif de commutation respectivement en mode bloqué ou passant au moyen d'une unité de commande des moyens de pompage, et en ce que ladite unité de commande est configurée pour commander l'activation du dispositif de commutation en mode passant dans au moins une première fenêtre temporelle de durée prédéterminée, déclenchée à un instant prédéterminé après le début d'émission du faisceau laser d'illumination, permettant de limiter en partie un flux lumineux parasite incident sur la voie de réception.

L'utilisation d'un milieu à gain optique peut permettre en outre l'amplification du signal rétroréfléchi par la scène, permettant ainsi d'augmenter la sensibilité du système.

Le brevet US 4 197 006 décrit la protection d'un système de réception d'une menace laser (impulsions laser de contre-mesure) par un cache mécanique commandé électriquement.

Le brevet US 3 521 070 décrit un encodeur utilisant une porte optique permettant un codage temporel d'un train d'impulsions à fréquence fixe. D'autres avantages et caractéristiques apparaîtront plus clairement à la lecture de la description qui suit, illustrée par les figures annexées qui représentent :
- Les figures 1A et 1B, les schémas d'un exemple de système optronique selon l'invention selon deux variantes;
- La figure 2, un schéma illustrant l'allure du signal de retour en fonction du temps ;
- La figure 3, un schéma illustrant un exemple d'utilisation du dispositif selon l'invention.

Sur les figures, les éléments identiques sont indexés par les mêmes repères.

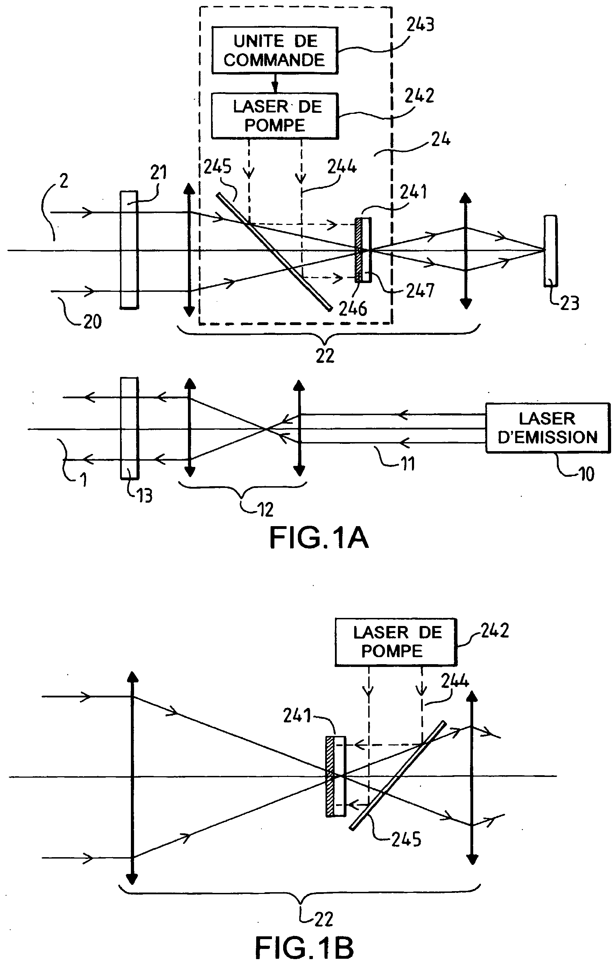

La figure 1A représente sous forme d'un schéma simplifié un exemple de système optronique actif laser selon l'invention. Il s'agit par exemple d'un système de télémétrie ou d'un système d'imagerie active. Il comprend une voie 1 pour l'émission d'un faisceau laser d'illumination d'une cible et une voie 2 pour la réception de l'onde rétrodiffusée par la cible. Dans cet exemple, les deux voies sont séparées, mais le système pourrait aussi bien être monostatique, c'est-à-dire avec une fenêtre d'entrée commune aux deux voies. La voie 1 comprend de façon connue une source d'émission 10 d'un faisceau laser 11 destiné à illuminer une cible (non représentée), un objectif 12 de mise en forme du faisceau, un hublot de sortie 13. La source d'émission laser est avantageusement une source impulsionnelle, mais une source d'émission continue ou quasi continue est également envisageable dans certaines applications, notamment en imagerie active. La voie de réception 2 du faisceau 20 correspondant au flux lumineux rétrodiffusé par la cible comprend outre le hublot d'entrée 21, un objectif 22 destiné à focaliser le faisceau lumineux 20 sur des moyens de détection 23 reliés à un dispositif électronique de traitement du signal (non représenté).

Selon l'invention, sur la voie de réception 2 est positionné un dispositif de commutation optique 24 qui reçoit l'onde rétrodiffusée 20. Il comprend un milieu à gain optique 241, des moyens de pompage 242 du milieu à gain, tels que le milieu à gain est absorbant à la longueur d'onde du laser d'émission 10 et devient sensiblement transparent lorsqu'il est pompé, de telle sorte à permettre l'activation du dispositif de commutation respectivement en mode bloqué ou passant. Le dispositif de commutation comprend en outre une unité de commande 243 des moyens de pompage permettant l'activation du dispositif de commutation en mode passant dans au moins une fenêtre temporelle de durée prédéterminée, déclenchée à un instant prédéterminé après le début d'émission du faisceau laser d'illumination.

Dans l'exemple de la figure 1A, le milieu à gain optique 241 est positionné dans un plan focal intermédiaire de la voie de réception, ce qui permet de pouvoir limiter la taille dudit milieu. Il est également envisageable de positionner le milieu à gain dans un plan pupillaire lorsque aucun plan focal intermédiaire n'est accessible et que la réalisation d'un milieu à gain de plus grande taille n'entraîne pas de difficulté technologique.

Dans cet exemple, les moyens de pompage sont des moyens de pompage optique, comprenant une source d'émission 242 d'un faisceau de pompe 244 destiné à pomper ledit milieu à gain 241. Une lame réfléchissante ou partiellement réfléchissante 245 à la longueur d'onde du faisceau de pompe 244 permet d'envoyer ledit faisceau vers le milieu à gain.

L'exemple de la figure 1A montre le pompage du milieu à gain dans le sens de propagation du flux incident. Il peut être avantageux de prévoir, comme cela est représenté sur la vue partielle de la figure 1 B, que le faisceau de pompe 244 se propage dans le milieu à gain 241 dans le sens opposé au sens de propagation du flux incident dans le système, pour limiter le flux parasite éventuel sur le détecteur 23. Dans ce cas, la lame partiellement réfléchissante 245 est située entre le milieu à gain 241 et le détecteur 23.

Selon la longueur d'onde de pompage du milieu à gain choisi, le faisceau de pompe peut être extrait de la source d'émission 10, ce qui permet de réduire l'encombrement total du système optronique. Les moyens de pompage peuvent être aussi des moyens de pompage électrique lorsque le milieu à gain le permet, ce qui permet de s'affranchir d'une source laser supplémentaire.

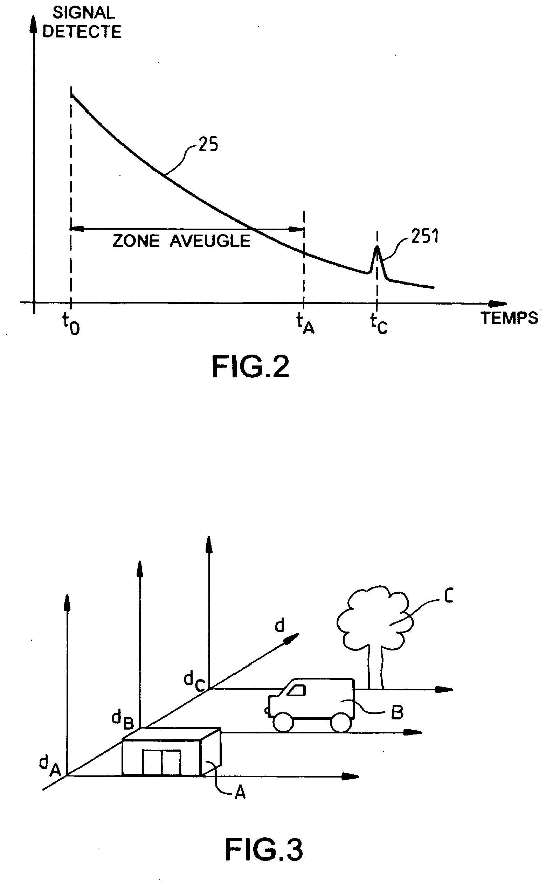

Le système optronique actif laser selon l'invention peut alors fonctionner de la manière suivante, illustrée par le schéma de la figure 2. Dans cet exemple, on suppose que la source d'émission 10 est une source impulsionnelle qui envoie à l'instant t₀ une impulsion vers une cible dont on veut par exemple faire une image. La courbe 25 de la figure 2 représente le signal détecté par les moyens de détection 23 (figure 1A) en fonction du temps. Cette courbe montre que ce signal comprend une composante très importante correspondant au flux émis par la source d'émission et rétrodiffusé par l'atmosphère avant d'atteindre la cible. Comme le montre la courbe 25, ce flux décroît en fonction du temps mais son amplitude peut être très importante par rapport au flux rétrodiffusé par la cible elle-même, correspondant sur la figure 2 au signal noté 251, qui peut être à des distances de plusieurs kilomètres du système optronique. Grâce au système de commutation selon l'invention, il est possible de générer une zone aveugle qui correspond à une fenêtre temporelle pendant laquelle le commutateur est bloqué. Ainsi sur la figure 2, le commutateur est bloqué entre l'instant t₀ d'émission de l'impulsion et un instant t_{A}, qui définit la zone distance aveugle du système d'imagerie. Une cible située à une distance supérieure envoie un signal d'écho 251 à un instant noté t_{C}. Il est ainsi possible de supprimer une grande partie du flux lumineux parasite incident sur les moyens de détection 23.

Le dispositif de commutation du système selon l'invention met en oeuvre un milieu à gain, pompé par des moyens de pompage, eux-mêmes contrôlés par une unité de commande afin de définir la zone aveugle. Pour obtenir une telle fonctionnalité, le milieu à gain est choisi de telle sorte que lorsqu'il n'est pas pompé, il est absorbant à la longueur d'onde du laser d'émission et devient sensiblement transparent, voire présente du gain optique, lorsqu'il est pompé. Certains milieux à gain connus de l'art antérieur, et décrits ci-dessous, peuvent fonctionner à des longueurs d'onde supérieures au micron, ce qui permet l'application de l'invention aux systèmes optroniques à sécurité oculaire. Par ailleurs, le gain de ce type de matériaux est sensiblement isotrope, ce qui est particulièrement intéressant dans le cas de l'imagerie active, pour lequel l'angle de vue peut être important. En outre, certains milieux à gain ont des temps de réponse très courts, comme les matériaux de type semi-conducteur, ce qui peut permettre des fonctionnalités supplémentaires qui seront décrites ultérieurement.

Dans un même temps, ces matériaux étant par principe des amplificateurs dont le gain est commuté, ils peuvent avantageusement être utilisés pour amplifier le niveau du signal rétroréfléchi par la cible, permettant ainsi d'optimiser la puissance laser nécessaire pour obtenir une portée déterminée, ce qui peut permettre de minimiser l'encombrement et la puissance de la source et de faciliter ainsi l'intégration du système dans des ensembles optroniques nécessitant une grande compacité et présentant des possibilités de puissance électrique limitées. Par ailleurs, le système selon l'invention permet à niveau de puissance laser équivalent, d'augmenter la portée du système.

De nombreux milieux à gain bien connus de l'état de l'art, peuvent être utilisés pour la mise en oeuvre du dispositif de commutation du système optronique selon l'invention.

Par exemple, le milieu à gain est un matériau semi-conducteur dont la bande de gain est ajustée en modifiant la composition ; il peut s'agir par exemple de matériau de type GaInAsP fabriqués par épitaxie et bien connus de l'état de l'art. Un avantage des matériaux semi-conducteurs est la possibilité d'un pompage électrique, ce qui peut simplifier la configuration optique du système en ne nécessitant pas de laser de pompe. Par exemple, dans le cas d'un système optronique mettant en oeuvre une source d'émission laser à 1,54 µm, on pourra utiliser un composé du type GaInAsP avec la composition adaptée. Le pompage peut être électrique, ou optique, à 0,98 µm, ou à 0,8 µm (longueur d'onde des diodes lasers classiquement utilisées pour le pompage des lasers solides de type Nd :YAG). Comme dans l'exemple de la figure 1, le milieu à gain peut être formé d'un empilement de couches semi-conductrices 246, d'une épaisseur typiquement de l'ordre du micron, sur un substrat 247.

Selon un autre exemple, il est possible d'utiliser les propriétés de certaines terres rares incorporées à des matrices transparentes, la condition correspondant à une absorption maximale du dispositif lorsqu'il n'est pas pompé étant vérifiée avec des matériaux de type 3 niveaux. Par exemple, on peut utiliser comme milieu à gain des ions Erbium dans du verre pour des longueurs d'onde du laser d'émission voisines de 1,54 µm.

Selon une variante de mise en oeuvre du système optronique actif laser selon l'invention, il est possible de générer des fenêtres temporelles correspondant à différentes portes distance. Ainsi, dans l'exemple de la figure 3, sont représentées trois cibles A, B, C situées à des distances d_{A}, d_{B}, d_{C} du système optronique. Grâce au contrôle des moyens de pompage du milieu à gain, on peut faire varier l'instant de la porte distance pour analyser la scène plan par plan. Par ailleurs, grâce à l'utilisation de milieux à gain type semi-conducteur qui ont des temps de réponse très rapides, il est possible d'obtenir des portes très fines et d'accéder ainsi à une résolution en distance de la cible pour de l'imagerie tridimensionnelle.

Outre l'application à l'imagerie tridimensionnelle, la résolution en distance peut être intéressante pour d'autres applications, comme par exemple la profilométrie, qui met en oeuvre l'analyse par un mono détecteur du profil de retour d'un train d'impulsions. Ce profil donne une signature de la cible observée.

Selon une variante, le milieu à gain est formé d'un bloc sensiblement homogène. Pour certaines applications, il peut être intéressant d'avoir un milieu à gain « pixelisé ». Par exemple, dans le cas d'un milieu à gain de type semi-conducteur, il est possible de disposer d'une matrice d'éléments à gain optique, typiquement de l'ordre de la dizaine de microns, lesdits éléments pouvant être pompés sélectivement par les moyens de pompage, par exemple des moyens de pompage électrique. Cela permet notamment des applications de type protection contre la menace laser en supprimant par blocage du dispositif de commutation un éventuel point d'éblouissement laser sur les moyens de détection. La même fonctionnalité peut être obtenue dans un milieu à gain formé d'un bloc homogène, avec des moyens de pompage optique qui comprennent outre la source d'émission d'un faisceau de pompe, un modulateur spatial de lumière sur lequel est envoyé le faisceau de pompe, permettant d'activer sélectivement différentes zones du milieu à gain, réparties sur l'ensemble du bloc selon une matrice à deux dimensions. Ainsi, le milieu à gain se trouve « pixélisé » par la configuration des moyens de pompage en autant de faisceaux de pompe élémentaires.

## Revendications

1. Système optronique actif laser comprenant une voie (1) pour l'émission d'un faisceau laser d'illumination d'une cible par une source d'émission (10), une voie (2) pour la réception de l'onde rétrodiffusée par la cible, et sur la voie de réception, un dispositif de commutation recevant ladite onde rétrodiffusée, **caractérisé en ce que**
- le dispositif de commutation est un dispositif de commutation optique (24) qui comprend un milieu à gain optique (241) et des moyens de pompage (242) dudit milieu à gain, ledit milieu à gain étant absorbant à la longueur d'onde du laser correspondant à un mode bloqué du dispositif de commutation et devenant sensiblement transparent lorsqu'il est pompé correspondant à un mode passant du dispositif de commutation, de telle sorte à permettre l'activation du dispositif de commutation respectivement en mode bloqué ou passant au moyen d'une unité de commande (243) des moyens de pompage, et **en ce que** ladite unité de commande est configurée pour commander l'activation du dispositif de commutation en mode passant dans au moins une première fenêtre temporelle de durée prédéterminée, déclenchée à un instant prédéterminé (t_{A}) après le début (t₀) d'émission du faisceau laser d'illumination, permettant de limiter en partie un flux lumineux parasite incident sur la voie de réception.

2. Système optronique selon la revendication 1, dans lequel le milieu à gain (241), lorsqu'il est pompé, génère en outre un effet d'amplification de l'onde rétrodiffusée.

3. Système optronique selon l'une des revendications précédentes, dans lequel les moyens de pompage sont des moyens de pompage optique comprenant une source d'émission (242) d'un faisceau de pompe destiné au pompage du milieu à gain.

4. Système optronique selon la revendication 3, dans lequel la source d'émission du faisceau de pompe est extraite de la source d'émission (10) du faisceau d'illumination de la cible.

5. Système optronique selon l'une des revendications précédentes, dans lequel le dispositif de commutation optique est positionné au voisinage d'un plan focal intermédiaire.

6. Système optronique selon la revendication 5, dans lequel le milieu à gain est formé d'un bloc homogène et en ce que les moyens de pompage sont des moyens de pompage optique, comprenant une source d'émission d'un faisceau de pompe et un modulateur spatial de lumière sur lequel est envoyé ledit faisceau de pompe, permettant d'activer sélectivement différentes zones du milieu à gain, réparties sur l'ensemble du bloc selon une matrice à deux dimensions.

7. Système optronique selon la revendication 5, dans lequel le milieu à gain est agencé sous forme d'une matrice d'éléments à gain optique, lesdits éléments pouvant être pompés sélectivement par lesdits moyens de pompage.

8. Système optronique selon l'une des revendications précédentes, dans lequel le milieu à gain est un matériau semi-conducteur, pompé par des moyens de pompage optique.

9. Système optronique selon l'une des revendications 1,2, 5 ou 7, dans lequel le milieu à gain est un matériau semi-conducteur, pompé par des moyens de pompage électrique.

10. Système optronique selon l'une des revendications 8 ou 9, dans lequel ledit matériau semi-conducteur est de type GaInAsP dont la composition est adaptée en fonction de la longueur d'onde du faisceau laser d'émission.

11. Système optronique selon l'une des revendications 1 à 6, dans lequel le milieu à gain est un matériau à 3 niveaux de transition.

12. Système optronique selon la revendication 11, dans lequel le milieu à gain comprend des ions Erbium, les moyens de pompage étant des moyens de pompage optique à 0,98 ou 1,48 microns.

13. Système optronique selon l'une des revendications précédentes, dans lequel l'unité de commande est programmée pour activer le dispositif de commutation en mode passant selon plusieurs fenêtres temporelles correspondant à des portes distance différentes (d_{A}, d_{B}, d_{c}) permettant une analyse plan par plan d'une scène.

## Patentansprüche

1. Aktive optoelektronische Laservorrichtung, die einen Kanal (1) zum Emittieren eines Laserstrahls zum Beleuchten eines Ziels durch eine Emissionsquelle (10), einen Kanal (2) zum Empfangen der vom Ziel zurückgestreuten Welle und, auf dem Empfangskanal, eine Schaltvorrichtung umfasst, die die zurückgestreute Welle empfängt, **dadurch gekennzeichnet, dass**
- die Schaltvorrichtung eine optische Schaltvorrichtung (24) ist, die ein optisches Verstärkungsmedium (241) und Mittel (242) zum Pumpen des Verstärkungsmediums umfasst, wobei das Verstärkungsmedium bei der Wellenlänge des Lasers absorbiert, die einem Sperrmodus der Schaltvorrichtung entspricht, und im Wesentlichen durchlässig wird, wenn es gepumpt wird, was einem Durchlassmodus der Schaltvorrichtung entspricht, so dass die Aktivierung der Schaltvorrichtung im Sperrmodus bzw. im Durchlassmodus mittels einer Steuereinheit (243) der Pumpmittel ermöglicht wird, und dadurch, dass die Steuereinheit zum Steuern der Aktivierung der Schaltvorrichtung im Durchlassmodus in mindestens einem ersten Zeitfenster von vorbestimmter Dauer konfiguriert ist, ausgelöst zu einem vorbestimmten Zeitpunkt (t_{A}) nach Beginn (t₀) der Emission des Beleuchtungslaserstrahls, so dass ein auf dem Empfangskanal einfallender parasitärer Beleuchtungsfluss teilweise begrenzt werden kann.

2. Optronisches System nach Anspruch 1, bei dem das Verstärkungsmedium (241), wenn es gepumpt wird, ferner einen Effekt des Verstärkens der zurückgestreuten Welle erzeugt.

3. Optronisches System nach einem der vorherigen Ansprüche, bei dem die Pumpmittel optische Pumpmittel sind, die eine Emissionsquelle (242) für einen Pumpstrahl zum Pumpen des Verstärkungsmediums umfasst.

4. Optronisches System nach Anspruch 3, bei dem die Emissionsquelle des Pumpstrahls von der Emissionsquelle (10) des Beleuchtungsstrahls des Ziels extrahiert wird.

5. Optronisches System nach einem der vorherigen Ansprüche, bei dem die optische Schaltvorrichtung in der Nähe einer Zwischenbrennebene positioniert ist.

6. Optronisches System nach Anspruch 5, bei dem das Verstärkungsmedium aus einem homogenen Block gebildet wird und **dadurch gekennzeichnet ist, dass** die Pumpmittel optische Pumpmittel sind, die eine Emissionsquelle für einen Pumpstrahl und einen räumlichen Lichtmodulator umfassen, auf dem der Pumpstrahl gesendet wird, so dass verschiedene Zonen des Verstärkungsmediums selektiv aktiviert werden können, die über den gesamten Block gemäß einer zweidimensionalen Matrix verteilt sind.

7. Optronisches System nach Anspruch 5, bei dem das Verstärkungsmedium in Form einer Matrix von Elementen mit optischer Verstärkung ausgebildet ist, wobei die Elemente selektiv von den Pumpmitteln gepumpt werden können.

8. Optronisches System nach einem der vorherigen Ansprüche, bei dem das Verstärkungsmedium ein Halbleitermaterial ist, das von den optischen Pumpmitteln gepumpt wird.

9. Optronisches System nach einem der Ansprüche 1, 2, 5 oder 7, bei dem das Verstärkungsmedium ein Halbleitermaterial ist, das von elektrischen Pumpmitteln gepumpt wird.

10. Optronisches System nach einem der Ansprüche 8 oder 9, bei dem das Halbleitermaterial vom Typ GaInAsP ist, dessen Zusammensetzung in Abhängigkeit von der Wellenlänge des Emissionslaserstrahls angepasst wird.

11. Optronisches System nach einem der Ansprüche 1 bis 6, bei dem das Verstärkungsmedium ein Material mit drei Übergangspegeln ist.

12. Optronisches System nach Anspruch 11, bei dem das Verstärkungsmedium Erbiumionen umfasst, wobei die Pumpmittel optische Pumpmittel mit 0,98 oder 1,48 Mikron sind.

13. Optronisches System nach einem der vorherigen Ansprüche, bei dem die Steuereinheit zum Aktivieren der Schaltvorrichtung im Durchlassmodus gemäß mehreren Zeitfenstern programmiert ist, entsprechend unterschiedlichen Entfernungstoren (d_{A}, d_{B}, d_{C}), die eine Analyse einer Szene Ebene für Ebene zulassen.

## Claims

1. Laser active optronic system comprising a channel (1) for the transmission of a laser beam for illuminating a target by a transmission source (10), a channel (2) for receiving the wave backscattered by the target and, on the reception channel, a switching device which receives the backscattered wave, **characterised in that**
- the switching device is an optical switching device (24) which comprises an optical gain medium (241) and means (242) for pumping the gain medium, the gain medium being absorbent at the wavelength of the laser which corresponds to a blocked mode of the switching device and becoming substantially transparent when it is pumped corresponding to a passing mode of the switching device, in order to enable the activation of the switching device either in blocked or passing mode using a control unit (243) of the pumping means, and **in that** the control unit is configured to control the activation of the switching device in passing mode in at least one first temporal window of a predetermined duration initiated at a predetermined time (t_{A}) after the start (t₀) of transmission of the illumination laser beam, allowing a parasitic light flow incident on the reception channel to be partially limited.

2. Optronic system according to claim 1, wherein the gain medium (241) when it is pumped further generates an effect of amplification of the backscattered wave.

3. Optronic system according to either of the preceding claims, wherein the pumping means are optical pumping means which comprise a transmission source (242) of a pump beam which is intended for pumping the gain medium.

4. Optronic system according to claim 3, wherein the transmission source of the pump beam is extracted from the transmission source (10) of the beam for illuminating the target.

5. Optronic system according to any one of the preceding claims, wherein the optical switching device is positioned in the region of an intermediate focal plane.

6. Optronic system according to claim 5, wherein the gain medium is formed from a homogeneous block and **characterised in that** the pumping means are optical pumping means, comprising a transmission source of a pump beam and a spatial light modulator to which the pump beam is sent, allowing selective activation of different zones of the gain medium which are distributed over the entire block in accordance with a two-dimensional matrix.

7. Optronic system according to claim 5, wherein the gain medium is provided in the form of a matrix of optical gain elements, the elements being able to be pumped selectively by the pumping means.

8. Optronic system according to any one of the preceding claims, wherein the gain medium is a semi-conductor material which is pumped by optical pumping means.

9. Optronic system according to any one of claims 1, 2, 5 or 7, wherein the gain medium is a semi-conductor material which is pumped by electrical pumping means.

10. Optronic system according to either claim 8 or claim 9, wherein the semi-conductor material is of the GaInAsP type whose composition is adapted in accordance with the wavelength of the transmission laser beam.

11. Optronic system according to any one of claims 1 to 6, wherein the gain medium is a material having three transition levels.

12. Optronic system according to claim 11, wherein the gain medium comprises erbium ions, the pumping means being optical pumping means at 0.98 or 1.48 microns.

13. Optronic system according to any one of the preceding claims, wherein the control unit is programmed in order to activate the switching device in passing mode in accordance with a plurality of temporal windows which correspond to different range gates (d_{A}, d_{B}, d_{C}) which enables a plane by plane analysis of a scene.
